# EUROPEAN PATENT APPLICATION

(11) **EP 2 757 720 A1**
(43) Date of publication of application: **23.07.2014**
(21) Application number: 13305044.3
(22) Date of filing: 16.01.2013
(51) Int. Cl.: H04L 1/00, H04L 1/08, H04W 72/00

(54) **Robust downlink control channel communication based on repetition of MIB over P-BCH**

(71) Applicant: Alcatel Lucent, 75007 Paris (FR)
(72) Inventor: Wong, Shin Horng, Swindon, Wiltshire SN5 7DJ (GB); Baker, Matthew, Swindon, Wiltshire SN5 7DJ (GB)
(74) Representative: Leppard, Andrew John

(57) **Abstract**

A wireless telecommunications method, a computer program product and network nodes are disclosed. The wireless telecommunication method comprises encoding downlink configuration information by repeating a master information block having a first configuration indicating the downlink configuration information at least once within a radio frame of a downlink transmission channel. By repeating the master information block within a radio frame, the user equipment can combine the energy from the successive repetitions in order to increase the likelihood that the master information block can be decoded. It will be appreciated that such repetitions, therefore, increase the coverage provided in areas of high attenuation.

## Description

### FIELD OF THE INVENTION

The present invention relates to a wireless telecommunications method, a computer program product and network nodes.

### BACKGROUND

Wireless telecommunications systems are known. In a cellular system, radio coverage is provided to user equipment, for example, mobile phones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink channels. Information and data transmitted by user equipment to the base station occurs on channels of radio carriers known as uplink channels. Although the deployment of base stations is largely controllable by the network operator, the deployment of user equipment is not. The deployment of user equipment within the network can cause unexpected consequences.

Accordingly, it is desired to provide an improved technique for communicating with user equipment.

### SUMMARY

According to a first aspect, there is provided a wireless telecommunication method, comprising: encoding downlink configuration information by repeating a master information block having a first configuration indicating the downlink configuration information at least once within a radio frame of a downlink transmission channel.

The first aspect recognizes that an increasing problem with the deployment of user equipment is that they can become deployed in areas suffering from high attenuation. This high attenuation can cause the user equipment to be unable to decode downlink configuration information, which is essential for being able to access appropriate downlink traffic. This means that when deployed in these areas of high attenuation, the user equipment is effectively unable to receive traffic from the base station. The first aspect also recognizes that existing standards fail to provide an adequate technique for providing this downlink configuration information in high attenuation deployments, which means that user equipment implementing those standards are unable to communicate with the network during such deployment. The first aspect further recognizes that whilst this is inconvenient for some user equipment when located in these high attenuation areas, coverage is restored when the user equipment moves to a lower attenuation area but that there is an emerging class of user equipment (such as machine type communication devices such as, for example, smart meters) which are immobile once installed; for those user equipment no network coverage is provided.

Accordingly, a wireless telecommunications method is provided. The method may comprise the step of encoding downlink configuration information. The downlink configuration information may comprise a repeated master information block. The master information block may have a first configuration. In embodiments, other master information blocks having other configurations may be transmitted. The master information block may be repeated one or more times within a radio frame of a downlink transmission channel. By repeating the master information block within a radio frame, the user equipment can combine the energy from the successive repetitions in order to increase the likelihood that the master information block can be decoded. It will be appreciated that such repetitions, therefore, increase the coverage provided in areas of high attenuation.

In one embodiment, each radio frame comprises a plurality of sub-frames and the master information block is repeated in a corresponding plurality of sub-frames. Accordingly, the master information block may be repeated within a number of sub-frames of each radio frame.

In one embodiment, the master information block is repeated in up to each of the corresponding plurality of sub-frames within each radio frame. Accordingly, the master information block may be repeated within all or fewer sub-frames within each radio frame. It will be appreciated that the number of repetitions increases the likelihood that the master information block can be decoded.

In one embodiment, the master information block is repeated in consecutive sub-frames within each radio frame. Accordingly, the master information block may be repeated in consecutive or adjacent sub-frames within the each radio frame. It will be appreciated that this simplifies locating and decoding each master information block. However, it will also be appreciated that the repetitions need not be within consecutive sub-frames.

In one embodiment, the master information block is repeated during an active period comprising a plurality of frames forming a first group of frames and omitted during a dormant period comprising a plurality of frames forming a second group of frames. Accordingly, in order to free up resources for use to support transmission of other information, such as other master information blocks having other configurations, a dormant period may be provided where no master information block with the first configuration is transmitted. This embodiment recognizes that providing reliable downlink configuration information to user equipment in high attenuation deployments at the expense of increased access time and latency may be acceptable to any such deployed user equipment.

In one embodiment, the first group of frames and the second group of frames each comprise a plurality of consecutive frames.

In one embodiment, the second group of frames comprise no fewer radio frames than the first group of radio frames.

In one embodiment, the second group of frames comprise more radio frames than the first group of radio frames. It will be appreciated that the exact number of radio frames in each group can be selected to achieve the required coverage and access time requirements.

In one embodiment, the method comprises alternating the active period and the dormant period.

In one embodiment, the method comprising encoding a second master information block having a second configuration indicating second downlink configuration information once within each radio frame of a downlink transmission channel. Accordingly, two configurations of master information block may be encoded within the same downlink transmission channel. The two configurations of master information block may be transmitted in order to support communication with user equipment in both the high attenuation deployment and user equipment deployed elsewhere.

In one embodiment, the second master information block is encoded in each radio frame in addition to the master information block during the active period and only the second master information block is encoded in each radio frame during the dormant period. Accordingly, both the second master information block and the master information block maybe transmitted within the same radio frame.

In one embodiment, the master information block and the second master information block each indicate most significant bits of a system frame number, the master information block indicating fewer most significant bits of the system frame number than the second master information block. For those embodiments where the number of radio frames within which the master information block is repeated is greater than the number of radio frames where the second master information block is repeated, the number of most significant bits of the system frame numbered encoded within the master information block will be fewer than that encoded by the second master information block. This ensures that the two master information blocks remain identical for their repetition period.

In one embodiment, the downlink transmission channel comprises a physical broadcast channel P-BCH.

According to a second aspect, there is provided a network node, comprising: encoding logic operable to encode downlink configuration information by repeating a master information block having a first configuration indicating the downlink configuration information at least once within a radio frame of a downlink transmission channel.

In one embodiment, each radio frame comprises a plurality of sub-frames and encoding logic is operable to repeat the master information block in a corresponding plurality of sub-frames.

In one embodiment, the encoding logic is operable to repeat the master information block in up to each of the corresponding plurality of sub-frames within each radio frame.

In one embodiment, the encoding logic is operable to repeat the master information block in consecutive sub-frames within each radio frame.

In one embodiment, the encoding logic is operable to repeat the master information, block during an active period comprising a plurality of frames forming a first group of frames and to omit the master information block during a dormant period comprising a plurality of frames forming a second group of frames.

In one embodiment, the first group of frames and the second group of frames each comprise a plurality of consecutive frames.

In one embodiment, the second group of frames comprise no fewer radio frames than the first group of radio frames.

In one embodiment, the second group of frames comprise more radio frames than the first group of radio frames.

In one embodiment, the encoding logic is operable to alternate the active period and the dormant period.

In one embodiment, the encoding logic is operable to encode a second master information block having a second configuration indicating second downlink configuration information once within each radio frame of a downlink transmission channel.

In one embodiment, the encoding logic is operable to encode the second master information block in each radio frame in addition to the master information block during the active period and the encoding logic is operable to encode only the second master information block in each radio frame during the dormant period.

In one embodiment, the master information block and the second master information block each indicate most significant bits of a system frame number, the master information block indicating fewer most significant bits of the system frame number than the second master information block.

In one embodiment, the downlink transmission channel comprises a physical broadcast channel P-BCH.

In one embodiment, the network node comprises a base station.

According to a third aspect, there is provided a wireless telecommunication method, comprising: decoding downlink configuration information, the downlink configuration information comprising a master information block having a first configuration indicating the downlink configuration information repeated at least once within a radio frame of a downlink transmission channel.

In one embodiment, each radio frame comprises a plurality of sub-frames and the decoding comprises decoding the master information block repeated in a corresponding plurality of sub-frames.

In one embodiment, the decoding comprises decoding the master information block repeated in up to each of the corresponding plurality of sub-frames within each radio frame.

In one embodiment, the decoding comprises decoding the master information block repeated in consecutive sub-frames within each radio frame.

In one embodiment, the decoding comprises decoding the master information block repeated during an active period comprising a plurality of frames forming a first group of frames and omitting decoding during a dormant period comprising a plurality of frames forming a second group of frames.

In one embodiment, the first group of frames and the second group of frames each comprise a plurality of consecutive frames.

In one embodiment, the second group of frames comprise no fewer radio frames than the first group of radio frames.

In one embodiment, the second group of frames comprise more radio frames than the first group of radio frames.

In one embodiment, the active period and the dormant period alternate.

In one embodiment, the method comprises decoding a second master information block having a second configuration indicating second downlink configuration information once within each radio frame of a downlink transmission channel.

In one embodiment, the decoding comprises decoding the second master information block in each radio frame in addition to the master information block during the active period and only decoding the second master information block in each radio frame during the dormant period.

In one embodiment, the master information block and the second master information block each indicate most significant bits of a system frame number, the master information block indicating fewer most significant bits of the system frame number than the second master information block.

In one embodiment, the downlink transmission channel comprises a physical broadcast channel P-BCH.

According to a fourth aspect, there is provided user equipment, comprising: decoding logic operable to decode downlink configuration information, the downlink configuration information comprising a master information block having a first configuration indicating the downlink configuration information repeated at least once within a radio frame of a downlink transmission channel.

In one embodiment, each radio frame comprises a plurality of sub-frames and the decoding logic is operable to decode the master information block repeated in a corresponding plurality of sub-frames.

In one embodiment, the decoding logic is operable to decode the master information block repeated in up to each of the corresponding plurality of sub-frames within each radio frame.

In one embodiment, decoding logic is operable to decode the master information block repeated in consecutive sub-frames within each radio frame.

In one embodiment, decoding logic is operable to decode the master information block repeated during an active period comprising a plurality of frames forming a first group of frames and omitting decoding during a dormant period comprising a plurality of frames forming a second group of frames.

In one embodiment, the first group of frames and the second group of frames each comprise a plurality of consecutive frames.

In one embodiment, the second group of frames comprise no fewer radio frames than the first group of radio frames.

In one embodiment, the second group of frames comprise more radio frames than the first group of radio frames.

In one embodiment, the active period and the dormant period alternate.

In one embodiment, decoding logic is operable to decode a second master information block having a second configuration indicating second downlink configuration information once within each radio frame of a downlink transmission channel.

In one embodiment, decoding logic is operable to decode the second master information block in each radio frame in addition to the master information block during the active period and to only decode the second master information block in each radio frame during the dormant period.

In one embodiment, the master information block and the second master information block each indicate most significant bits of a system frame number, the master information block indicating fewer most significant bits of the system frame number than the second master information block.

In one embodiment, the downlink transmission channel comprises a physical broadcast channel P-BCH.

According to a fifth aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates transmission of a master information block in a transmission channel;
Figure 2 illustrates transmission of a modified master information block in a transmission channel according to one embodiment; and
Figure 3 illustrates transmission of the modified master information block together with the master information block in a transmission channel according to one embodiment.

### DESCRIPTION OF THE EMBODIMENTS

### Overview

Before discussing the embodiments in any more detail, first an overview will be provided. As mentioned above, a difficulty with deploying some types of user equipment is that they are located in areas which suffer from high losses such as, for example, high penetration losses due to their position within a building and therefore it is difficult for the user equipment to communicate with the network. One example of such use equipment is a machine type communication device that is used by a machine such as, for example, a smart utility meter. Some of these smart utility meters are located in a basement or other areas which suffer from high attenuation of radio signals and it is desired to extend the coverage of these devices by 20 dB.

Before the user equipment can access the network, it needs to be able to read a downlink control channel which includes downlink configuration information. One example of such a downlink control channel is the physical broadcast channel (P-BCH) which carries the master information block (MIB) which is configured to include an indication of the system bandwidth, an indication of the format of an acknowledgment channel and the most significant 8 bits of the 10 bit system frame number (SFN). As shown in Figure i, the master information block 10A with one configuration is transmitted to 4 times, once in each 10ms radio frame, over a 40ms window. Typically, the master information block 10A is transmitted within the same one of the 10 sub-frames making up each radio frame. The 2 least significant bits of the system frame number can be derived from these transmissions within the 40ms window. In the following 40ms window, the most significant 8 bits of the system frame number will change and so the master information block 10A contents and cyclic redundancy check information differ in each 40ms window. Typically, the change in the master information block 10A at the 40ms window boundary can be used to derive the other 2 bits of the system frame number.

However, this approach to transmitting the master information block 10A is insufficient for user equipment in high penetration loss areas. Accordingly, embodiments provide techniques where the master information block is repeated a number of times within a radio frame of a downlink transmission channel. Repeating the master information block enables the energy from successive repetitions to be combined in order to improve the likelihood of being able to decode this information. However, in order to achieve coverage in very high penetration loss areas, the extent of repetition within a radio frame may result in virtually the whole resource of the radio frame over the 40ms window being required to be used for transmissions of the master information block, particularly for a narrow bandwidth carrier. Accordingly, in some embodiments, fewer resources within each radio frame can be consumed by repeating a master information block over a larger number of radio frames than 4. In order to achieve this, the configuration of the master information block will differ since the number of most significant bits of the system frame number transmitted is reduced compared to that repetition of the master information block mentioned above. This enables successive repetitions within this larger group of radio frames to be combined since the system frame number for that larger group of radio frames will not change.

### Enhanced coverage transmission

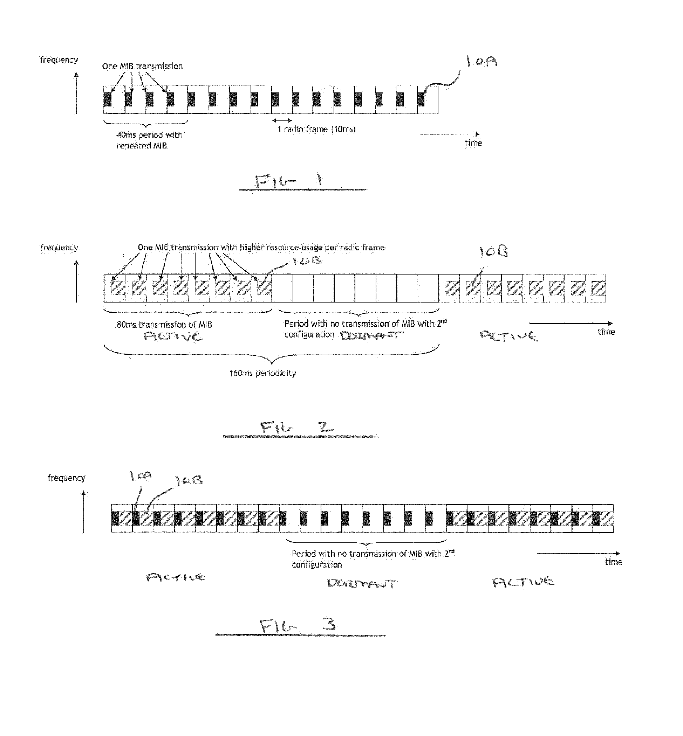

Figure 2 illustrates the transmission of a modified master information block 10B which has a different configuration to that of the master information block 10A to provide high coverage to the user equipment in poor reception areas. As can be seen, the same 10ms radio frame arrangement as shown in Figure 1 is used. However, in this embodiment the modified master information block 10B is repeated within each radio frame. Although it is possible to transmit the master information block 10B using all the resources of each radio frame (such as every sub-frame within each radio frame), it is preferred that fewer than all the resources are utilized so that these resources may be utilized for other purposes, as will become clear from the embodiment mentioned below. Merely repeating the modified master information block 10B using additional resources within each radio frame will increase the coverage of the downlink channel and improve reception in high attenuation deployments.

However, in this embodiment, the number of radio frames which repeats the modified master information block 10B is increased compared to that of Figure 1. In this example, the number of radio frames which repeatedly transmit the same modified master information block 10B is increased from 4 to 8, although greater numbers of repetitions are possible. In order that the modified master information block 10B transmitted is identical in each of these 8 radio frames, its configuration differs in that the number of most significant bits of the system frame number needs to be reduced compared to that transmitted in the arrangement of Figure 1 in order that these do not change during these transmissions. It will be appreciated that if a greater number of radio frames are used then fewer most significant bits can be transmitted. The energy from these repeated transmissions are then combined by the user equipment in order to enable more reliable decoding of the master information block 10B.

The period during which the modified master information block 10B is transmitted in successive radio frames is referred to as the active period. If this active period was maintained, then the availability of resources within the downlink channel would decrease since it they would be dominated by the transmissions of the modified master information block 10B. Accordingly, the active periods are interspersed with dormant periods, which are periods when successive radio frames do not carry the modified master information block 10B. This frees up resources for the downlink channel to transmit other information. This is possible because many machine type communication devices do not require a high quality of service and are able to tolerate relatively long latencies and so are able to cope with delays when accessing the network. In the example shown, the dormant period matches the active period. However, it will be appreciated that this is unlikely to be the case in and instead the dormant period is likely to be significantly longer than the active period (for example, anything from around 10s upwards). Also, the active period may be longer than 8oms, as mentioned above.

### Concurrent master information block transmissions

Figure 3 illustrates an arrangement where both the master information block 10A and the modified must information block 10B are transmitted over the same downlink channel. This enables the network to support both user equipment which required fast access, up to a certain coverage level since they can read the configuration with the shorter periodicity. User equipment in poor coverage areas can read the modified master information block 10B which uses greater resources and increases the access time to the network due to the longer periodicity. Given that the master information block 10A occupies 1 sub-frame of each radio frame then, in this embodiment, the modified master information block 10B can be repeated using up to the retaining 9 sub-frames.

Hence, it can be seen that this arrangement enables a master information block to be broadcast in a cell with a plurality of configurations at the same time. The parameters of each configuration typically comprise a periodicity and an amount of resources. One of the configurations uses a shorter periodicity and a smaller amount of resource per transmission whilst another of the configurations uses a longer periodicity and a greater amount of resource a transmission.

Accordingly, it can be seen that in order to transmit the modified master information block 10B, a greater amount of resources for transmissions are required which comprise at least one of a greater number of radio frames and a greater amount of resource per radio frame. In those embodiments which use a greater number of radio frames, the number of most significant bits of the system frame number is reduced, which further improves reliability of the signaling. The least significant bits of the serial frame number can still be determined by the boundary between the sets of radio frames in a conventional manner.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic dicks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunication method, comprising:
encoding downlink configuration information by repeating a master information block having a first configuration indicating said downlink configuration information at least once within a radio frame of a downlink transmission channel.

2. The method of claims 1, wherein each radio frame comprises a plurality of sub-frames and said master information block is repeated in a corresponding plurality of sub-frames.

3. The method of claim 1 or 2, wherein said master information block is repeated in up to each of said corresponding plurality of sub-frames within each radio frame.

4. The method of any preceding claim, wherein said master information block is repeated in consecutive sub-frames within each radio frame.

5. The method of any preceding claim, wherein said master information block is repeated during an active period comprising a plurality of frames forming a first group of frames and omitted during a dormant period comprising a plurality of frames forming a second group of frames.

6. The method of claims 5, wherein said second group of frames comprise no fewer radio frames than said first group of radio frames.

7. The method of any one of claims 5 or 7, wherein said second group of frames comprise more radio frames than said first group of radio frames.

8. The method of any one of claims 5 to 7, comprising alternating said active period and said dormant period.

9. The method of any preceding claim, comprising encoding an additional master information block having a second configuration indicating second downlink configuration information once within each radio frame of a downlink transmission channel.

10. The method of claims 9, wherein said second master information block is encoded in each radio frame in addition to said master information block during said active period and only said second master information block is encoded in each radio frame during said dormant period.

11. The method of claims 9 or 10, wherein said master information block and said additional master information block each indicate most significant bits of a system frame number, said master information block indicating fewer most significant bits of said system frame number than said second master information block.

12. A network node, comprising:
encoding logic operable to encode downlink configuration information by repeating a master information block having a first configuration indicating said downlink configuration information at least once within a radio frame of a downlink transmission channel.

13. A wireless telecommunication method, comprising:
decoding downlink configuration information, said downlink configuration information comprising a master information block having a first configuration indicating said downlink configuration information repeated at least once within a radio frame of a downlink transmission channel.

14. User equipment, comprising:
decoding logic operable to decode downlink configuration information, said downlink configuration information comprising a master information block having a first configuration indicating said downlink configuration information repeated at least once within a radio frame of a downlink transmission channel.

15. A computer program product operable, when executed on a computer, to perform the method steps of any one of claims 1 to 11 or 13.
